# EUROPEAN PATENT APPLICATION

(11) **EP 3 293 099 A2**
(43) Date of publication of application: **14.03.2018**
(21) Application number: 17203795.4
(22) Date of filing: 27.11.2017
(51) Int. Cl.: B62J 1/02, B62J 1/08

(54) **A BICYCLE AND MOTORBIKE SADDLE SUSPENSION SYSTEM**

(71) Applicant: Lauf Forks ehf., 101 Reykjavik (IS)
(72) Inventor: SKÚLASON, Benedikt, 105 Reykjavik (IS); BENEDIKTSSON, Bergur, 104 Reykjavik (IS)
(74) Representative: Inspicos P/S

(57) **Abstract**

A bike saddle suspension system(100) comprises a suspension structure comprising an upper leaf spring member (102) adapted to be fixed to a bike saddle (104) and a lower leaf spring member (103) below the upper leaf spring member (102), the lower leaf spring member (103) being adapted to be attached to a bike seatpost (105). The upper and lower leaf spring members (102;103) are connected together at their ends or end areas, in front of the saddle's longitudinal center and behind the saddle's longitudinal center respectively. The vertical distance between the upper and lower leaf spring members (102; 103) is configured to provide suspension under a vertical load applied on top of the bike saddle (104).

## Description

### FIELD OF THE INVENTION

The present invention relates to a bicycle saddle suspension system, and to a bicycle and motorbike comprising such a vehicle suspension system.

### BACKGROUND OF THE INVENTION

Today's bike (bicycles and motorbikes) saddle suspension systems (i.e. suspension systems that suspend the rider contact with the bike saddle, in contrast to bike rear wheel suspension systems that are commonly referred to as full-suspension bikes) can be categorized into 4 key categories.
1. Flexible seatpost/seat-tube solutions: These include Trek Iso-Speed®, Canyon VCLS® and Specialized CG-R®. These solutions provide suspension that acts substantially more rearwards than vertically (while the hits from the ground when riding mostly act vertically), therefore they offer limited amount of vertical displacement and significantly affect the bike's geometry as the distance from saddle to handlebar changes during the suspension movement. Furthermore, as the VCLS and CG-R solutions rely on the flex of the seatpost itself, they therefore cannot be used with a dropper-seatposts (that offer on-the-fly adjustable saddle height adjustments). The latest iteration of the Trek Iso-Speed solution is the only solution in the category that provides easy stiffness adjustability, however the Trek Iso-Speed solution is a redesign of the bike frame itself and therefore has the downside of not allowing retrofits on other bikes, it requires the entire frame to be built around it. With associated cost for the end-user.
2. Coil spring sprung saddles: These were very common on bicycles until the 1970's, and remain an option on comfort oriented city bikes. A coil spring saddle however lacks easy stiffness adjustment options, has poor suspension travel guiding (i.e. the coil springs are soft laterally, therefore soft sprung coil spring saddles would benefit from an additional suspension guiding mechanism) and coil sprung saddles are inherently heavy which makes them unattractive to performance cyclists.
3. Telescopic suspension seatposts: As most bicycle frames have the seatpost mounted at a rearwards tilt this means that the suspension path is guided along this non-vertical path, the saddle therefore shifts forward during suspension. Telescopic seatposts require spring replacement or advanced tools to adjust their stiffness. Telescopic seatposts either slide on bushings or bearings. Both introduce weight to the system and are susceptible to wear and therefore require maintenance. When bushings and/or seals are used, the static friction of telescopic seatposts prevent them from responding to small vibrations. In bike setups where the rider opts to have the saddle in a rearward position (not directly above the seatpost) the resulting torque on telescopic seatposts affects their performance and wears bushings and/bearings faster. Furthermore, telescopic suspension seatposts prevent the rider from using their otherwise potentially preferred dropper-seatposts.
4. 4-bar linkage suspension seatposts: These include the Cane Creek Thudbuster® and the Cirrus Cycle's Body Float® seatposts. These require spring or elastomer replacement to adjust stiffness, they add significant weight to the bike, add significant visual bulk and wind resistance, are susceptible to wear of their pivots and therefore require maintenance, they have a high build height which means that smaller riders might not be able to adjust their saddle low enough. Furthermore, telescopic suspension seatposts prevent the rider from using their otherwise potentially preferred dropper-seatposts.

The inventor of the present invention has appreciated that there is thus a need for an improved bike saddle suspension system.

### SUMMARY OF THE INVENTION

It would be advantageous to achieve an improved, simplified and light weight bike saddle suspension system. In general, the invention preferably seeks to mitigate, alleviate or eliminate one or more of the above-mentioned disadvantages singly or in any combination. In particular, it may be seen as an object of the present invention to provide a bike saddle suspension system that solved the above-mentioned problems, or other problems, of the prior art.

To better address one or more of these concerns, in a first aspect of the invention a bike saddle suspension system is provided comprising
- a suspension structure comprising:
   ∘ an upper leaf spring member adapted to be fixed to a bike saddle,
   ∘ a lower leaf spring member below said upper leaf spring member, said lower leaf spring member being adapted to be attached to a bike seatpost,
   said upper and lower leaf spring members are connected together at their ends or end areas, in front of said saddle's longitudinal center and behind the said saddle's longitudinal center respectively, where the vertical distance between said upper and lower leaf spring members is configured to provide suspension under a vertical load applied on top of said bike saddle.

Accordingly, a suspension structure is provided that provides suspension vertically under a vertical load applied on top of an attached saddle (assuming that the saddle is set up horizontal), but is at the same time not as susceptible to suspension movement in the horizontal plane. The term saddle's longitudinal center may according to the present invention be understood as where distance to the foremost and rearmost part of said saddle is similar or equal.

In one embodiment of said saddle suspension system, the front ends of said upper and lower leaf spring members reach substantially towards the foremost part of the attached saddle and their rear ends reach substantially towards the rearmost part of the attached saddle. As an example, said upper and lower leaf spring members lack less than 5cm to reach the foremost part of the attached saddle and their rear ends lack less than 3cm to reach the rearmost part of the attached saddle, but this should of course not be construed being limited to these numbers.

In one embodiment of said saddle suspension system, said leaf spring members have widths of 20-30mm on their foremost part and 60-100mm at their rearmost part. But this should of course not be construed being limited to these numbers.

In one embodiment of said saddle suspension system, the ends or end areas of said leaf spring members are shaped so that their thickness is uniform across their width. This ensures optimal leaf spring function, i.e. results in a structure that can be stronger and/or lighter for a given amount of leaf spring function.

In one embodiment of said saddle suspension system, said upper and lower leaf spring members and their end or end areas connections are all made of the same single continuous piece. This makes for a lighter structure that is less prone to failure under load at part junctions.

In one embodiment of said saddle suspension system, said upper leaf spring member is fixed to said saddle by one or more front connection members and one or more rear connection members, said one or more front connection members having their foremost interaction with said upper leaf spring member located posteriorly to their rearmost interaction with said saddle and said one or more rear connection members having their rearmost interaction with said upper leaf spring member located anteriorly to their foremost interaction with said saddle. Thus, a system is provided that can provide two things at the same time; firstly, an effective hammock like suspension of the attached saddle, since the support points of the saddle can be close to the front and rear ends of the saddle, and secondly increases the effective length of said upper leaf spring member so it can provide more suspension travel than otherwise possible.

In one embodiment the said one or more front connection members and one or more rear connection members are formed from a single body.

In one embodiment of said saddle suspension system, the saddle suspension system further comprises one or more stiffness adjustment inserts, arranged between said upper and lower leaf spring members, said one or more stiffness adjustment inserts being configured so they can be moved to different longitudinal positions within said suspension system. This enables riders of different body weight or with different riding preferences to adjust the stiffness of the saddle suspension system appropriately.

In one embodiment of said saddle suspension system, said one or more stiffness adjustment inserts have their widths extending at least essentially between the left and right edge of said flexible members. Thus, an adjustable saddle suspension system is provided that does not roll excessively to the sides when the rider is pedaling or maneuvering.

In one embodiment of said saddle suspension system, said one or more stiffness adjustment inserts have a sloping design with thickness such that the longitudinal end that is closer to an end of said leaf spring members is such that, when in rest position, it reaches said upper and lower leaf spring members, while the thickness of its opposite longitudinal end is such that, in rest position, it does not reach between said upper and lower flexible members. This makes for a suspension system with progressive stiffness. Stiffness increasing as the opposite longitudinal ends of said one or more stiffness adjustment inserts come in contact with said leaf spring members when they flex under load, making the effective leaf spring length shorter. In other words, when low load is applied on top of the saddle the effective leaf spring length, of said upper and lower leaf spring members of said suspension structure, is determined by the edges of stiffness adjustment inserts that are further away from the longitudinal center of the saddle. When more load is applied on top of the saddle the upper and lower leaf spring members flex more, eventually also coming in contact with the edges of the stiffness adjustment inserts that are closer to the saddle longitudinal center. This shortens the effective leaf springs and thereby ramps up the stiffness of said suspension structure. This is a benefit for riders who want sensitive suspension for small hits, without worrying about bottoming out the suspension on larger hits.

In one embodiment of said saddle suspension system, a portion of the width of said one or more stiffness adjustment inserts partly exceeds the edges of at least either of said upper and lower leaf spring members, said portion being configured to engage with at least one of said flexible member so as to prevent the stiffness adjustment inserts from sliding laterally.

In one embodiment of said saddle suspension system, said stiffness adjustment inserts engage with the said at least one of said upper and lower leaf spring members by a vertical extrusion at the portions that extend beyond the edges of said leaf spring member.

In one embodiment of said saddle suspension system, said vertical extrusions of said one or more stiffness adjustment inserts and the engaging sides of said at least one of said upper and lower leaf spring members further comprise a mechanically gripping texture, said vertical extrusions further comprising means of pressuring said at least one of said upper and lower leaf spring members laterally. Means of pressuring said flexible member laterally may be done via, but are not limited to, spring loading, screw tightening, etc.

In one embodiment of said saddle suspension system, said means of said vertical extrusions of pressuring said at least one of said upper and lower leaf spring members laterally is achieved through a spring-loaded lever, where pushing or pulling the lever levitates the pressure on said at least one of said upper and lower leaf spring members and thus allows said stiffness adjustment insert to be slid longitudinally while lever is pushed or pulled.

In one embodiment of said saddle suspension system said one or more stiffness adjustment inserts are designed so that one or more mechanically gripping indexing ribs that are attached on top of said lower leaf spring member or attached underneath said upper leaf spring member can run through them while also engaging with them to enable front/back location indexing for said one or more stiffness adjustment inserts, said one or more mechanically gripping indexing ribs being oriented so that they extend front/back along said one or more leaf spring members.

In one embodiment of said saddle suspension system said one or more stiffness adjustment inserts can be moved front/back via one or more adjustment screws that connect said one or more leaf spring members to said one or more stiffness adjustment inserts. Turning said one or more screws in one direction making the said suspension structure stiffer by moving the said one or more stiffness adjustment inserts further towards the longitudinal center of said saddle suspension system, while turning said one or more screws in the other direction makes the said suspension structure softer by moving said one or more stiffness adjustment inserts further away from the longitudinal center of said saddle suspension system.

### BRIEF DESCRIPTION OF DRAWINGS

Embodiments of the invention will be described, by way of example only, with reference to the drawings, in which:
FIGS. 1-9 show a saddle suspension system according to the present invention, without stiffness adjustment inserts.
FIGS. 10-17 show a saddle suspension system according to the present invention, with one or more stiffness adjustment inserts.

### DESCRIPTION OF EMBODIMENTS

The present invention relates to an improved, simplified and light weight bike saddle suspension system. The system provides properly guided suspension without supplementary means of suspension guiding, i.e. sliding surfaces and/or links and pivots, which is reflected in less maintenance and better response to excitation. Also, the weight of additional components such as telescopic sliders and/or links and pivots is eliminated.

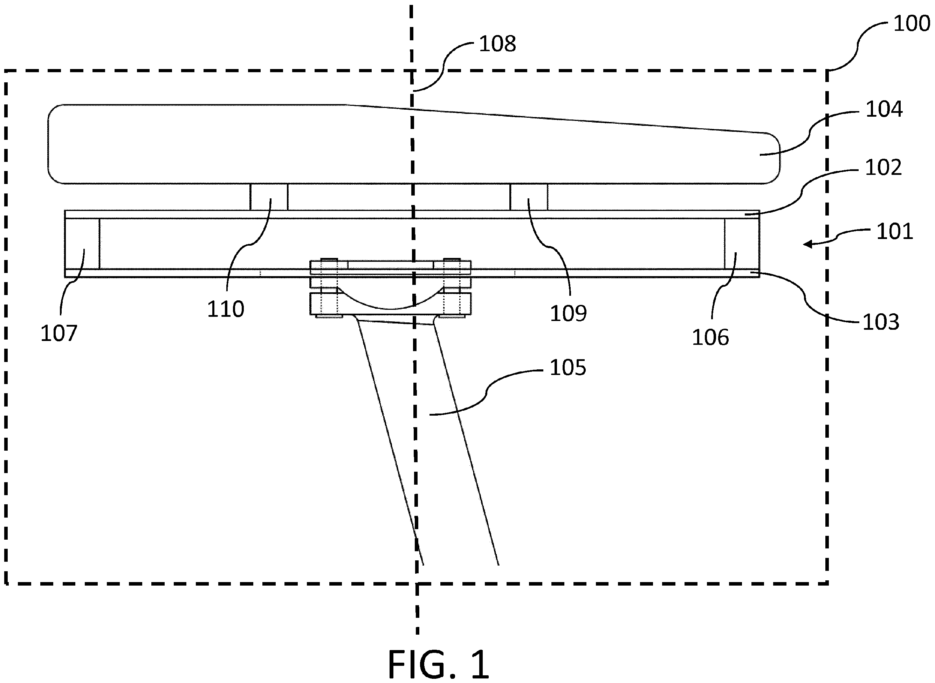

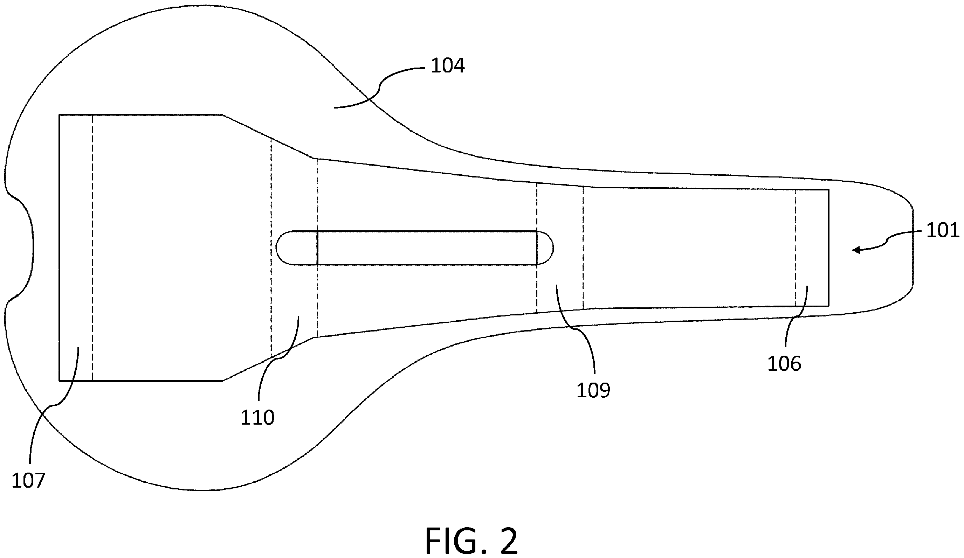

FIGS. 1 and 2 show two different views of a saddle suspension system 100 according to the present invention, where figure 1 shows side view of the bike saddle suspension system 100 according to the present invention and figure 2 a planar view of figure 1 by looking straight up under the saddle suspension system 100 shown in figure 1 with a seatpost 105 in figure 1 being removed. The saddle suspension system 100 comprises a suspension structure 101 where the suspension structure comprises an upper leaf spring member 102 adapted to be fixed to a bike saddle 104 (e.g. by one or more front connection members 109 and one or more rear connection members 110), a lower leaf spring member 103 below said upper leaf spring member. The lower leaf spring member being adapted to be attached to a bike seatpost 105. The upper and lower leaf spring members are connected at their ends or end areas (e.g. through connector pieces 106, 107), in front of said saddle's longitudinal center 108 and behind the said saddle's longitudinal center, where the vertical distance between said upper and lower leaf spring members is configured to provide suspension under a vertical load applied on top of said bike saddle. As shown here, saddle's longitudinal center is where distance to the foremost and rearmost part of said saddle is similar or equal.

In the embodiment on FIG 1, the front ends of said upper and lower leaf spring members reach substantially towards the foremost part of the attached saddle and their rear ends reach substantially towards the rearmost part of the attached saddle. As an example, said upper and lower leaf spring members lack less than 5cm to reach the foremost part of the attached saddle and their rear ends lack less than 3cm to reach the rearmost part of the attached saddle, but this should of course not be construed as being limited to these distances. In this embodiment said leaf spring members have widths of 20-30mm on their foremost part and 60-100mm at their rearmost part, but this should of course not be construed as being limited to these widths.

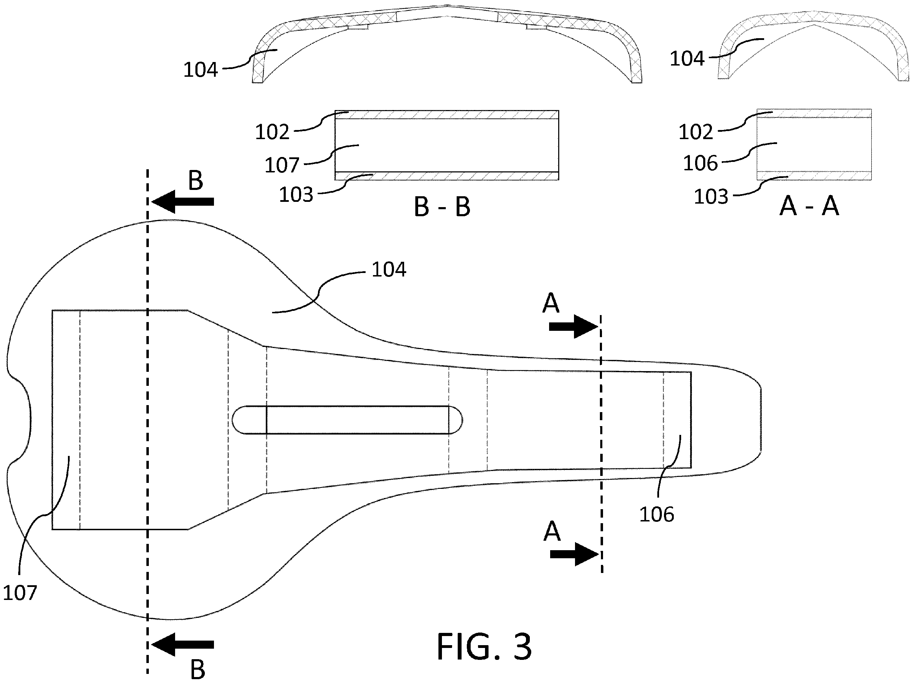

FIG 3 shows an embodiment of the saddle suspension system shown in FIG 2, in this embodiment the ends or end areas of said leaf spring members 102, 103 are shaped so that their thickness is uniform across their width. The two cross sections A-A and B-B depict this. Shown and marked are also the connector pieces 106, 107 and saddle 104.

This ensures optimal leaf spring function, i.e. results in a structure that can be stronger and/or lighter for a given level of leaf spring function.

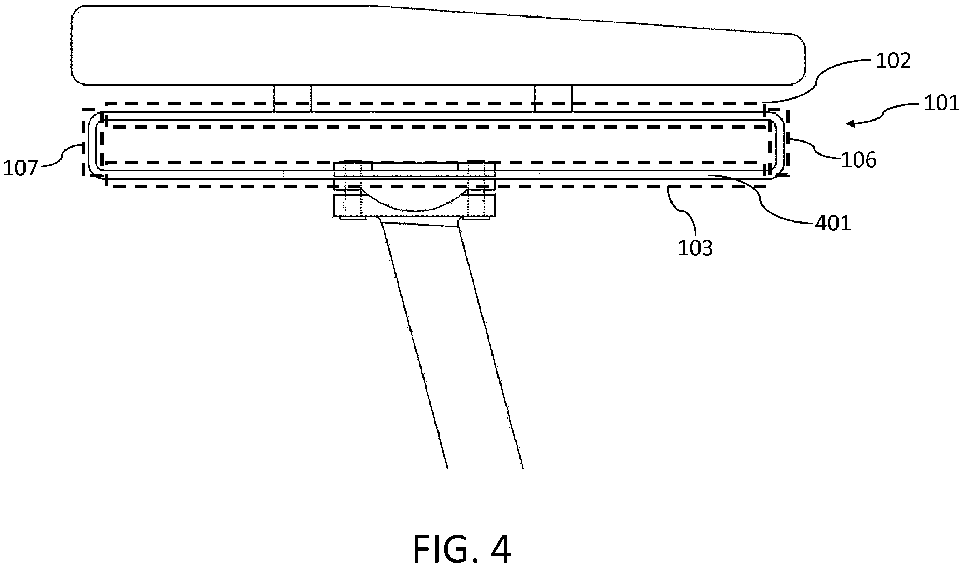

FIG 4 shows an embodiment of the saddle suspension system from previous figures wherein said suspension structure 101, including upper and lower leaf spring members (102 and 103 respectively) and their end or end area connector pieces (106 and 107), is formed from a single continuous piece 401.

This makes for a lighter structure that is less prone to failure under load at part junctions.

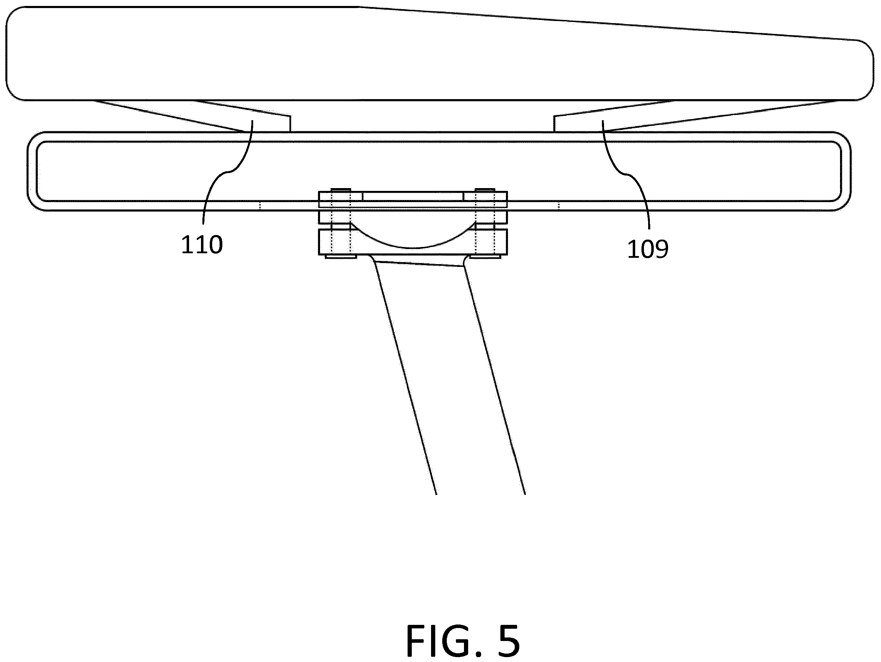

FIG 5 shows an embodiment of the saddle suspension system from FIG 4 wherein said upper leaf spring member is fixed to said saddle by one or more front connection members 109 and one or more rear connection members 110, said one or more front connection members having their foremost interaction with said upper leaf spring member located posteriorly to their rearmost interaction with said saddle and said one or more rear connection members having their rearmost interaction with said upper leaf spring member located anteriorly to their foremost interaction with said saddle.

This makes for a system that can provide two things at the same time; firstly, enabling an effective hammock like suspension of the attached saddle, since the support points of the saddle can be close to the front and rear ends of the saddle, and secondly increases the effective length of said upper leaf spring member so it can provide more suspension travel than otherwise possible.

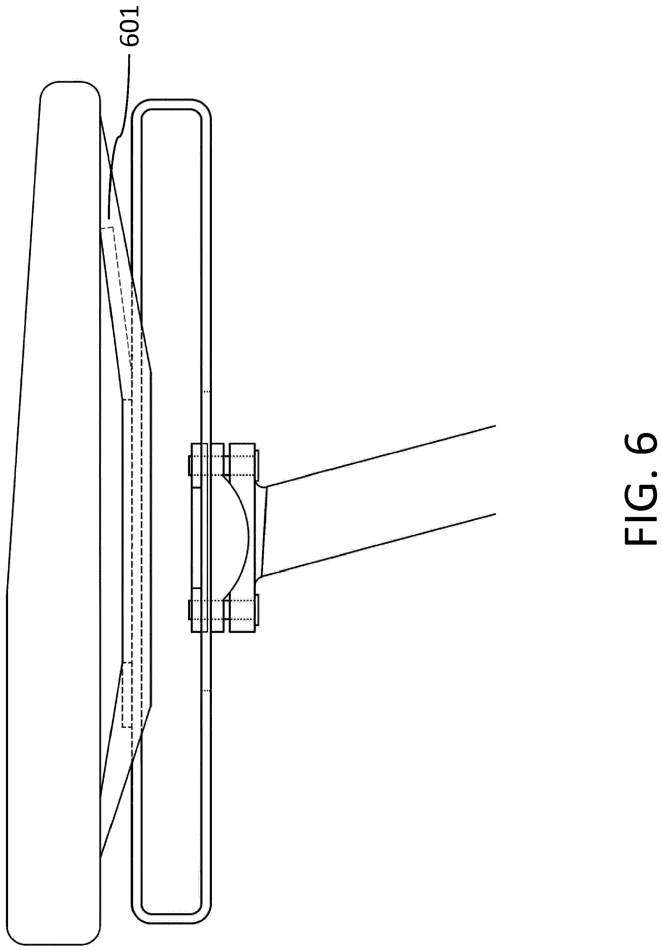

FIG 6 shows an embodiment of the saddle suspension system from FIG 5 wherein the said one or more front connection members and one or more rear connection members are formed from a combined single-body front and rear connection member 601.

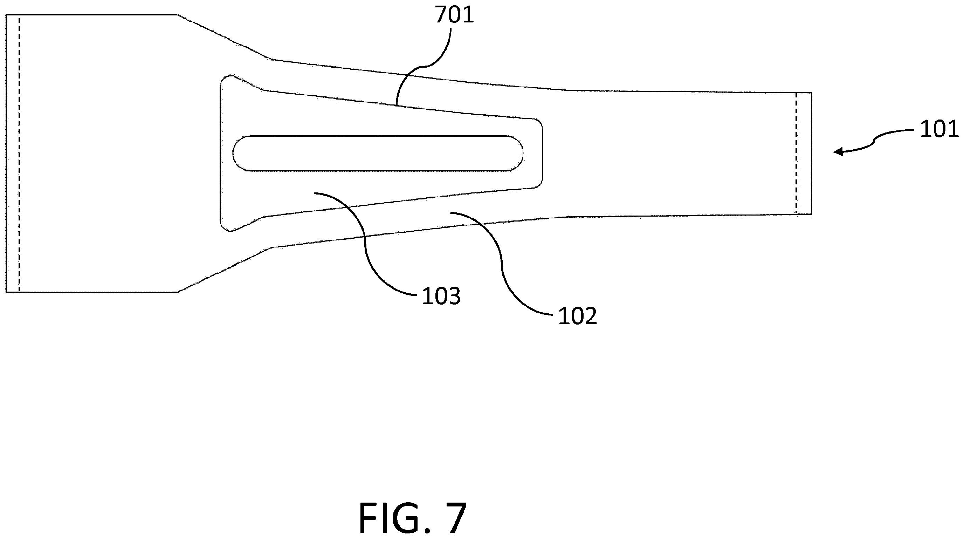

FIG 7 shows an embodiment of the suspension structure 101 from FIG 6 (for clarity, saddle and seatpost not shown here) wherein a view from above shows a cutout 701 into the said upper leaf spring member 102 (said lower leaf spring member 103 being visible through the cutout), said cutout; making the system lighter, providing space for the top piece of an attached seatpost (when the system is compressed under load and seatpost top would otherwise come in contact with said upper leaf spring member) and providing means of snapping said one or more front and rear connection members into place when assembling the saddle suspension system.

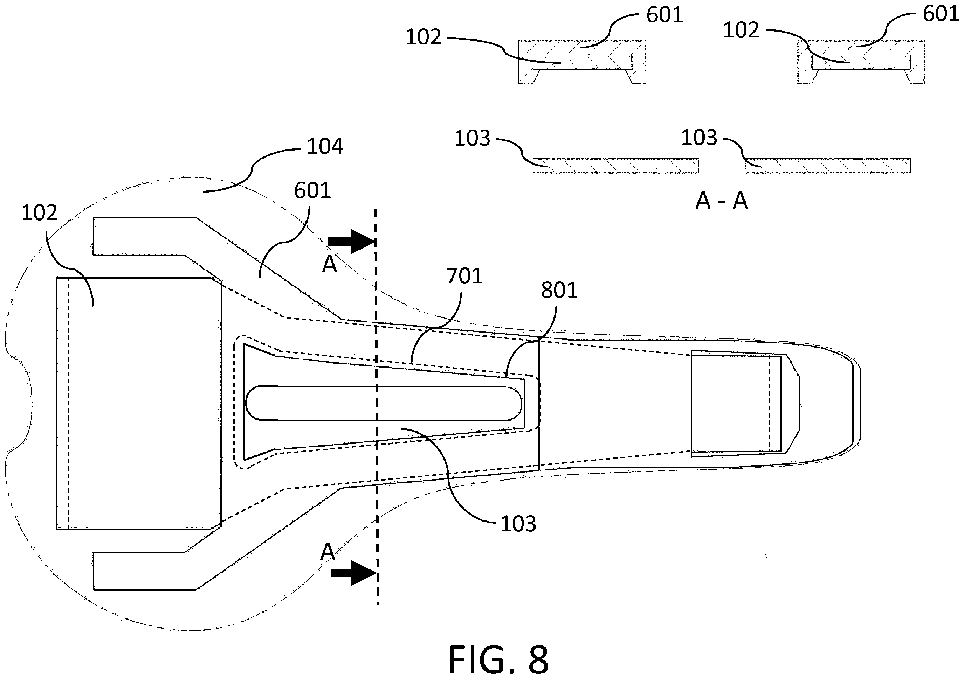

FIG 8 shows a view from above on an embodiment of the suspension structure from FIG 7 in an embodiment of the saddle suspension system from FIG 6. Said attached saddle 104 has only its outlines shown in this figure, and is otherwise transparent, for illustrational purposes. Here the said combined single-body front and rear connection member 601 has an opening 801 in its shape, designed to follow the cutout 701 into the said upper leaf spring member 102, said opening provides space for top-clamp of an attached seatpost during full compression of the suspension system. Said lower leaf spring member 103 is visible through said opening. Section plane cut A-A (a plane cut where only the plane intersection is shown, i.e. objects further away from the cutting plane are not displayed) shows how said combined single-body front and rear connection member 601 can grip mechanically around said upper leaf spring member 102. This mechanical fastening of a) said combined single body front and rear connection member and b) said upper leaf spring member, can be supplemented by various other fastening methods, such as bonding, bolting, riveting etc.

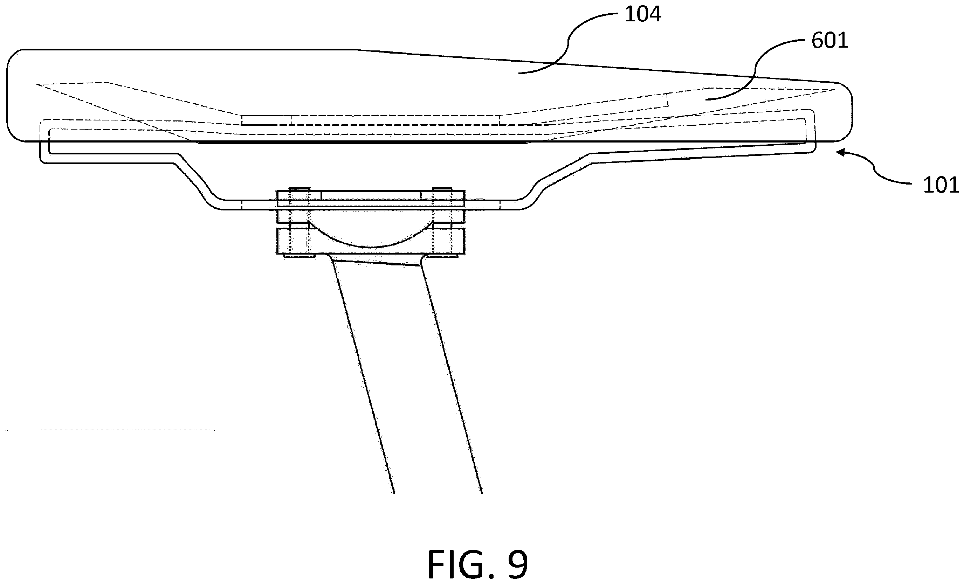

FIG 9 shows an embodiment of the saddle suspension system from FIGs 6-8 wherein said suspension structure 101 and said combined single-body front and rear connection member 601 have been designed to occupy less vertical space. Here the suspension structure utilizes the vacant space within the envelope of the said saddle 104.

This makes for a system that is more stable laterally, since now the suspension structure is closer to the input forces acting on top of the saddle, this minimizes the lever arm towards the suspension structure, and thereby improves its lateral stability. This also makes for a system that has a smaller frontal area when riding, thereby reducing air resistance.

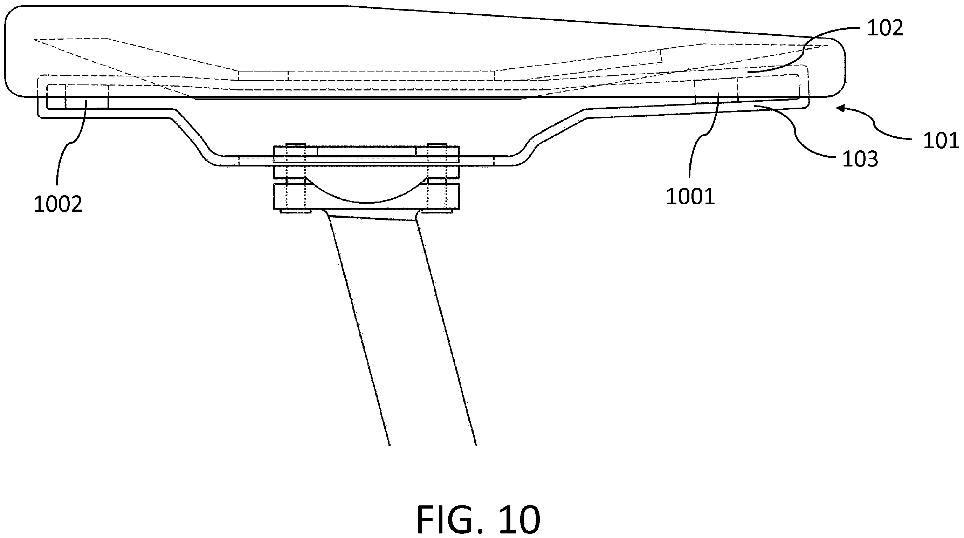

FIG 10 shows an embodiment of the suspension system from FIG 9 further comprising one or more stiffness adjustment inserts 1001, 1002, arranged between said upper and lower leaf spring members (102 and 103 respectively), said one or more stiffness adjustment inserts being configured so they can be moved to different longitudinal positions within said suspension structure 101.

This enables riders of different body weights or with different riding preferences to adjust the stiffness of his saddle suspension system.

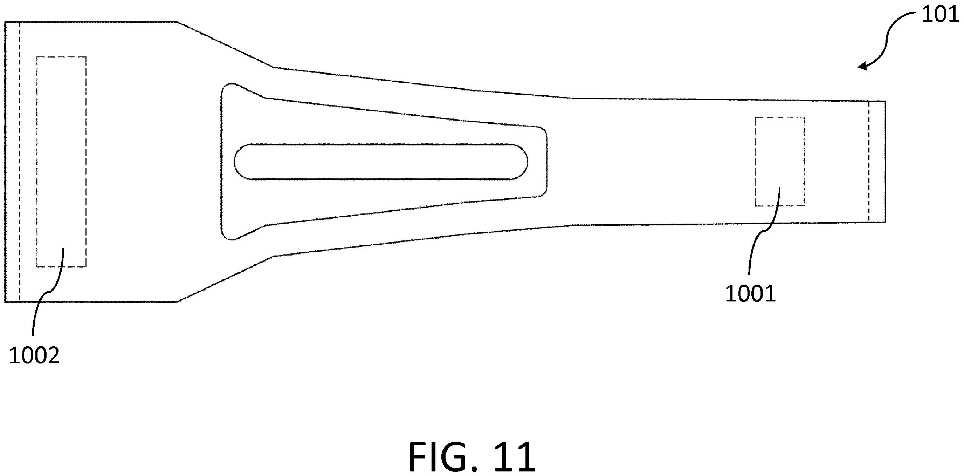

FIG 11 shows an embodiment of the suspension structure from FIG 10 wherein said one or more stiffness adjustment inserts 1001, 1002, have their widths extending at least essentially between the lateral edges of said suspension structure 101.

This makes for an adjustable saddle suspension system that does not roll excessively to the sides when the rider is pedaling or maneuvering.

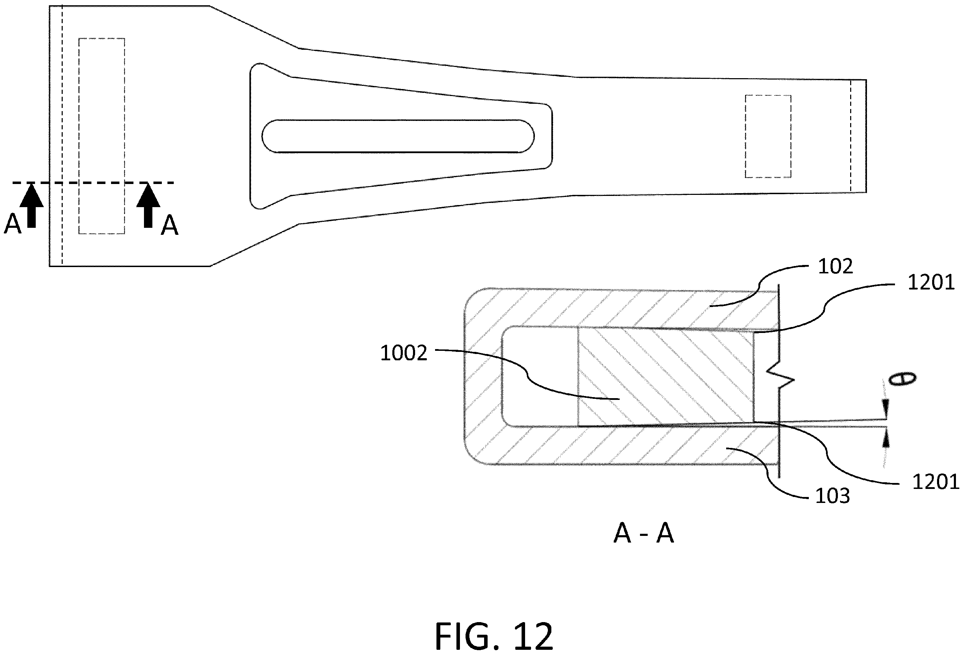

FIG 12 shows a cross section detail view A-A of an embodiment of the suspension structure from FIG 11 wherein said one or more stiffness adjustment inserts (1002 and 1003 in other figures, only 1002 shown as an example in this figure) have a sloping design with thickness such that the longitudinal end that is closer to an end of said leaf spring members is such that, when in rest position, it reaches said upper and lower leaf spring members 102, 103 (respectively) while the thickness of its opposite longitudinal end 1201 is such that, in rest position, it does not reach between said upper and lower flexible members. The angle θ in the figure shows an example of amount of flex required from said upper and lower leaf spring members to come in contact with the said opposite longitudinal end of said one or more stiffness adjustment insert. In this example the majority of the gap is below said stiffness adjustment insert (on the side where angle θ is shown), this is not to be construed as necessarily being the case, the gap can be all above or all below said stiffness adjustment inserts, or it can be split up between being above and below.

This makes for a suspension system with progressive stiffness. Stiffness increasing as the opposite longitudinal ends of said one or more stiffness adjustment inserts come in contact with said leaf spring members when they flex under load, making the effective leaf spring length shorter. This is a benefit for riders who want sensitive suspension for small hits, without worrying about bottoming out the suspension on larger hits.

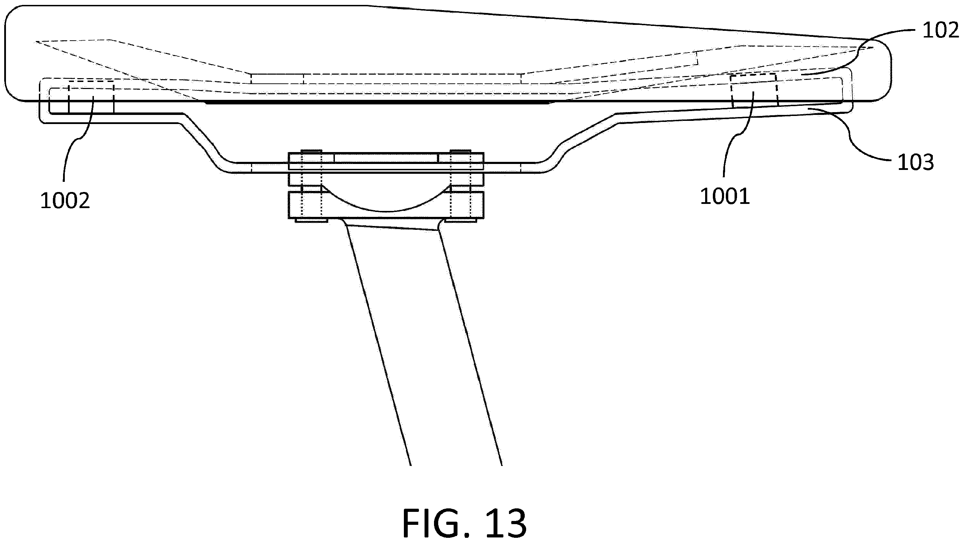

FIG 13 shows an embodiment of the saddle suspension system from FIGs 9-12 where a portion of the width of said one or more stiffness adjustment inserts 1001, 1002, partly exceeds the edges of at least either of said upper and lower leaf spring members 102, 103 (respectively) said portion being configured to engage with said at least one of said upper and lower leaf spring members so as to prevent the stiffness adjustment inserts from sliding laterally.

In the embodiment shown on FIG 13 said stiffness adjustment inserts engage with the said at least one of said upper and lower leaf spring members by vertical extrusions at the portions that extend beyond the edges of said leaf spring member.

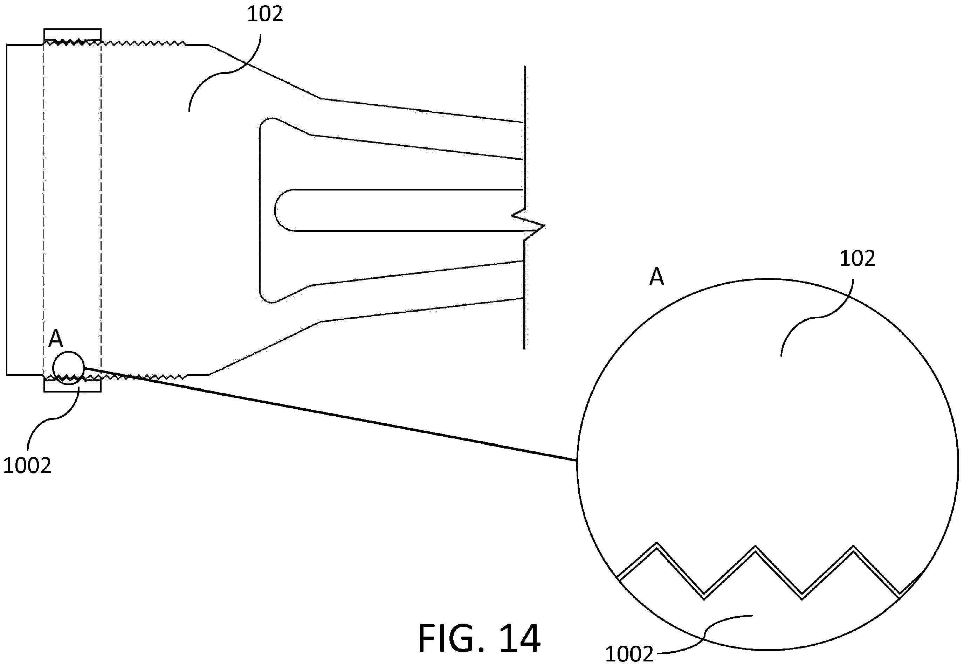

FIG 14 shows a detail view of an embodiment of the saddle suspension system from FIG 13 where said vertical extrusions of said one or more stiffness adjustment inserts (1002 and 1003 in other figures, only 1002 shown as an example in this figure) and the engaging sides of said at least one of said upper and lower leaf spring members 102, 103 (respectively) further comprise a mechanically gripping texture, said vertical extrusions further comprising means of pressuring said leaf spring member laterally. Means of pressuring said at least one of said upper and lower leaf spring members laterally are not described in this figure, but may be via spring loading, screw tightening, etc.

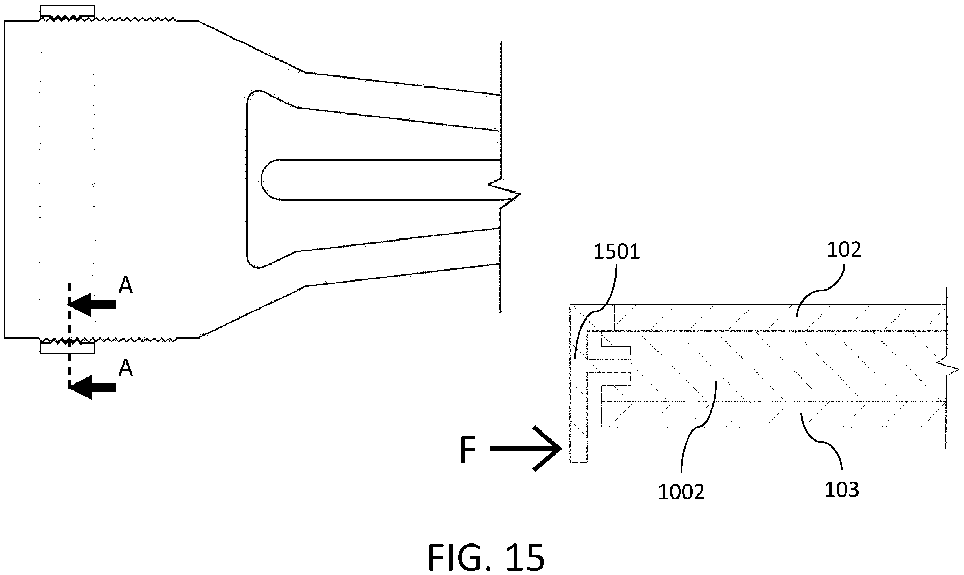

FIG 15 shows an embodiment of the said one or more stiffness adjustment inserts (1002 and 1003 in other figures, only 1002 shown as an example in this figure) from FIG 14 where said means of said vertical extrusions of pressuring said at least one of said upper and lower leaf spring members laterally is achieved through a spring loaded lever 1501, where pushing the lever with force F levitates the pressure on said at least one of said upper and lower leaf spring members and thus allows said stiffness adjustment insert to be slid longitudinally while lever is pushed. This particular embodiment relies on said stiffness adjustment insert spring loaded lever being pushed inwards, other similar embodiments achieve the same function by pulling a similar lever outwards.

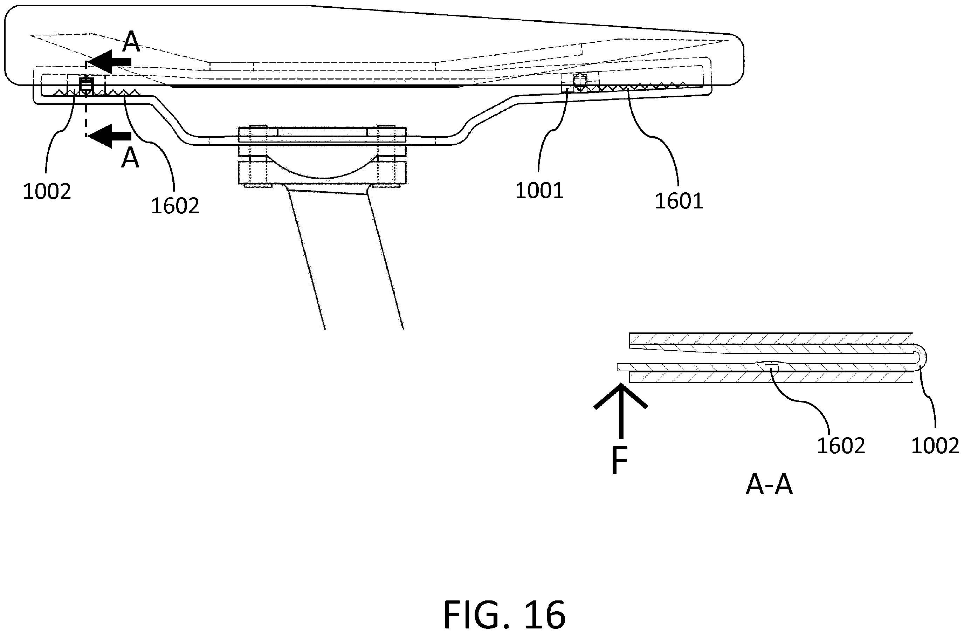

FIG 16 shows an embodiment of the saddle suspension system from FIGs 9-12 where said one or more stiffness adjustment inserts 1001, 1002 have their longitudinal central portion designed to engage, via its spring-like design, with a mechanically gripping indexing rib (1601, 1602). Section plane cut A-A (a plane cut where only the plane intersection is shown, i.e. objects further away from the cutting plane are not displayed) shows an example of a spring that ensures engagement with said mechanically gripping indexing rib, in one embodiment the said stiffness adjustment insert can be pushed with force F to further facilitate longitudinal slide of said one or more stiffness adjustment inserts. In these embodiments, the foremost and rearmost portions of said one or more stiffness adjustment inserts have some material removed to enable said mechanically gripping indexing rib to run through. In this figure the mechanically gripping indexing rib is placed on the said lower leaf spring member, but could equally be placed on the said upper leaf spring member.

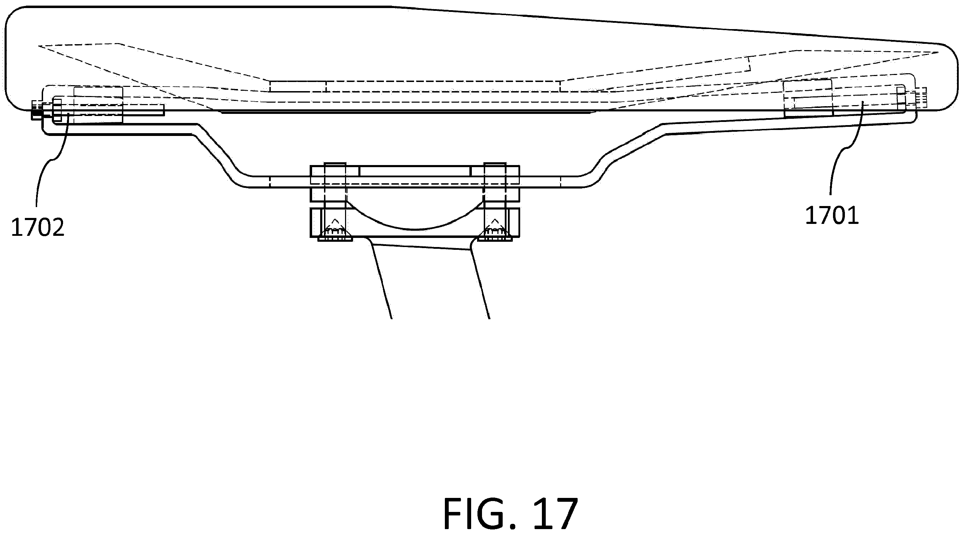

FIG 17 shows an embodiment of the saddle suspension system from FIGs 9-12 where said one or more stiffness adjustment inserts can be moved front/back via one or more adjustment screws 1701, 1702 that connect said one or more leaf spring members to said one or more stiffness adjustment inserts. Turning said one or more screws in one direction making the said suspension structure stiffer by moving the said one or more stiffness adjustment inserts further towards the longitudinal center of said saddle suspension system, while turning the said one or more screws in the other direction makes the said suspension structure softer by moving said one or more stiffness adjustment inserts further away from the longitudinal center of said saddle suspension system.

## Claims

1. A bike saddle suspension system comprising:
• a suspension structure comprising:
∘ an upper leaf spring member adapted to be fixed to a bike saddle,
∘ a lower leaf spring member below said upper leaf spring member, said lower leaf spring member being adapted to be attached to a bike seatpost,
wherein said upper and lower leaf spring members are connected together at their ends or end areas, in front of said saddle's longitudinal center and behind the said saddle's longitudinal center respectively, where the vertical distance between said upper and lower leaf spring members is configured to provide suspension under a vertical load applied on top of said bike saddle.

2. The bike saddle suspension system according to claim 1, wherein the front ends of said upper and lower leaf spring members reach substantially towards the foremost part of the attached saddle and their rear ends reach substantially towards the rearmost part of the attached saddle. As an example, said upper and lower leaf spring members lack less than 5cm to reach the foremost part of the attached saddle and their rear ends lack less than 3cm to reach the rearmost part of the attached saddle.

3. The bike saddle suspension system according to claim 1 or 2, wherein said leaf spring members have widths of 20-30mm on their foremost part and 60-100mm at their rearmost part.

4. The bike saddle suspension system according to any of the preceding claims, wherein the ends or end areas of said leaf spring members are shaped so that their thickness is uniform across their width.

5. The bike saddle suspension system according to any of the preceding claims, wherein said upper and lower leaf spring members and their end or end areas connections are all made of the same single continuous piece.

6. The bike saddle suspension system according to any of the preceding claims, wherein said upper leaf spring member is fixed to said saddle by one or more front connection members and one or more rear connection members, said one or more front connection members having their foremost interaction with said upper leaf spring member located posteriorly to their rearmost interaction with said saddle and said one or more rear connection members having their rearmost interaction with said upper leaf spring member located anteriorly to their foremost interaction with said saddle.

7. The bike saddle suspension system according to any of the preceding claims, wherein said one or more front connection members and one or more rear connection members are formed from a single body.

8. The bike saddle suspension system according to any of the preceding claims, wherein the saddle suspension system further comprises one or more stiffness adjustment inserts, arranged between said upper and lower leaf spring members, said one or more stiffness adjustment inserts being configured so they can be moved to different longitudinal positions within said suspension system.

9. The bike saddle suspension system according to claim 8, wherein said one or more stiffness adjustment inserts have their widths extending at least essentially between the left and right edge of said leaf spring members.

10. The bike saddle suspension system according to claims 8 or 9, wherein said one or more stiffness adjustment inserts, of said saddle suspension system, have a sloping design with thickness such that their longitudinal end that is closer to an end of said leaf spring members is such that, when in rest position, it reaches both said upper and lower leaf spring members, while the thickness of the inserts' opposite longitudinal end is such that, in rest position, it does not reach both said upper and lower leaf spring members.

11. The bike saddle suspension system according to any of the claims 8 to 10, wherein a portion of the width of said one or more stiffness adjustment inserts partly exceeds the edges of at least either said upper or lower leaf spring members, said portion being configured to engage with at least one of said leaf spring members so as to prevent the stiffness adjustment inserts from sliding laterally.

12. The bike saddle suspension system according to any of the claims 8 to 11, wherein said one or more stiffness adjustment inserts engage with said at least one of said upper and lower leaf spring members by vertical extrusions at the portions that extend beyond said one or more of engaged edges of said at least one of said upper and lower leaf spring members.

13. The bike saddle suspension system according to claim 12, wherein said vertical extrusions of said one or more stiffness adjustment inserts and the said one or more engaging sides of said at least one of said upper and lower leaf spring members further comprise a mechanically gripping texture, said vertical extrusions further comprising means of pressuring said at least one of said upper and lower leaf spring members laterally.

14. The bike saddle suspension system according to claim 13, wherein said means of said vertical extrusions of pressuring said at least one of said upper and lower leaf spring members laterally is achieved through a spring-loaded lever, where pushing or pulling the lever levitates the pressure on said at least one of said upper and lower leaf spring members and thus allows said stiffness adjustment insert to be slid longitudinally while lever is pushed or pulled.
